# FASCICULE DE BREVET EUROPEEN

(11) **EP 3 007 911 B1**
(45) Date de publication et mention de la délivrance du brevet: **14.08.2019**
(21) Numéro de dépôt: 14729881.4
(22) Date de dépôt: 05.06.2014
(51) Int. Cl.: B60C 11/00, B60C 11/03

(54) **PNEUMATIQUE COMPORTANT UNE BANDE DE ROULEMENT PERFECTIONNEE**
REIFEN MIT EINEM VERBESSERTEN PROFIL
TYRE COMPRISING AN IMPROVED TREAD

(30) Priorité: 10.06.2013 FR 1355311; 02.09.2013 FR 1358374
(43) Date de publication de la demande: 20.04.2016
(73) Titulaire: Compagnie Générale des Etablissements Michelin, 63000 Clermont-Ferrand (FR)
(72) Inventeur: BOURGEOIS, Frédéric, F-63040 Clermont-Ferrand Cedex 9 (FR); BRUNEAU, François-Xavier, F-63040 Clermont-Ferrand Cedex 9 (FR); FRAYSSE, Patrice, F-63040 Clermont-Ferrand Cedex 9 (FR); IGIER, Emmanuel, F-63040 Clermont-Ferrand Cedex 9 (FR)
(74) Mandataire: Millanvois, Patrick Jacques Jean
(86) Numéro de dépôt international: PCT/EP2014/061650
(87) Numéro de publication internationale: WO 2014/198616

(56) Documents cités:
- EP-A1- 2 565 056
- WO-A1-2011/076680
- WO-A1-2012/175444
- JP-A- H0 325 003

## Description

### DOMAINE DE L'INVENTION

La présente invention concerne les pneumatiques pour véhicules de tourisme. Elle concerne plus particulièrement les pneumatiques adaptés à une conduite routière sportive.

### ARRIERE-PLAN

L'adhérence des pneumatiques sur le sol sur lequel ils roulent est une des caractéristiques les plus importantes du point de vue de la sécurité du conducteur d'un véhicule équipé de pneumatiques. Elle est aussi déterminante pour les performances du véhicule en conduite routière sportive : si ses pneumatiques perdent leur pouvoir directeur par défaut d'adhérence, le véhicule n'est plus dirigeable.

Bien entendu, un véhicule, même s'il est destiné à une utilisation sportive, est amené à rouler dans des circonstances climatiques variables. Il est donc connu de pourvoir le pneumatique de moyens permettant une bonne adhérence sur sol sec et sur sol mouillé. Il est notamment possible d'adapter au moins une partie de la sculpture de la bande de roulement à une utilisation sur sol mouillé, par exemple en prévoyant des évidements permettant de drainer et/ou de stocker de l'eau, ou en multipliant des arêtes de sculpture permettant de transpercer le film d'eau formé entre la bande de roulement et le sol. Il est également possible de varier les matériaux formant la bande de roulement, en utilisant des compositions caoutchouteuses adaptées plus particulièrement à une utilisation sur sol mouillé et/ou sur sol sec. Une bande de roulement comportant les deux types de composition caoutchouteuse permet d'obtenir une bonne adhérence en toutes circonstances. Un exemple d'un tel pneumatique est donné dans le document EP 1 308 319**.**

En condition de conduite routière sportive, les pneumatiques d'un véhicule subissent d'importants efforts transversaux lorsque le véhicule équipé des pneumatiques effectue un virage. Au cours du virage, ces efforts transversaux induisent, pour l'aire de contact entre chaque pneumatique et le sol sur lequel il roule, une déformation analogue à une mise en trapèze : le côté de l'aire de contact qui est le plus éloigné du centre du virage se rallonge, alors que le côté de l'aire de contact qui est le plus près du centre du virage se raccourcit.

Le « côté de l'aire de contact le plus éloigné du centre du virage » est le côté par lequel s'effectue, dans la direction de la vitesse de dérive du centre de la roue sur laquelle le pneumatique est monté, l'entrée des éléments de la bande de roulement au contact avec le sol. Pour cette raison, il est parfois appelé « bord d'attaque (transversal) » ou « leading edge ». Le côté opposé, c'est-à-dire, le « côté de l'aire de contact le plus près du centre du virage » est parfois appelé « bord de fuite (transversal) » ou « trailing edge ».

Cette déformation de « mise en trapèze » modifie à la fois la charge portée par les différentes nervures de la bande de roulement et la contribution de chacune à l'effort transversal développé par le pneumatique. Pour une charge donnée, à porter par l'un des pneumatiques du véhicule dans un régime de virage donné, les nervures qui se sont allongées portent une plus grande part de la charge totale portée par le pneumatique. Les nervures qui se sont raccourcies portent une part d'autant moindre de la charge totale portée par le pneumatique. Pour un effort transversal donné, délivré par l'un des pneumatiques dans un régime de virage donné, il en résulte que les nervures les plus chargées (c'est-à-dire, en général, celles qui se trouvent du côté le plus éloigné du centre du virage) sont celles qui assurent aussi la plus forte contribution à l'effort transversal total.

Les compositions caoutchouteuses adaptées à une utilisation sur sol mouillé sont en général plus fragiles vis-à-vis des contraintes thermiques et mécaniques très élevées générées dans l'aire de contact d'un pneumatique en régime de virage sévère sur un revêtement routier sec. Si on pourvoit la bande de roulement du pneumatique de portions en composition caoutchouteuse de meilleure adhérence sur sol sec et de portions en composition caoutchouteuse de meilleure adhérence sur sol mouillé, il est préférable de prévoir que le composition caoutchouteuse de meilleure adhérence sur sol sec soit placé sur le côté de l'aire de contact qui est le plus éloigné du centre du virage. Ainsi, même si l'aire de contact se trouvera mise en trapèze, le pneumatique gardera une bonne adhérence sur sol sec, c'est-à-dire une bonne capacité à développer un effort transversal important. En outre, comme les pressions de contact au sol sont plus fortes sur ce même côté de l'aire de contact (qui est le plus éloigné du centre du virage), le drainage de l'eau mouillant le revêtement du sol est en général plutôt satisfaisant dans cette partie de l'aire de contact. Par conséquent, cette zone de la bande de roulement se prête bien à l'utilisation d'une composition caoutchouteuse de meilleure adhérence sur sol sec. En d'autres termes, le pneumatique roule, dans cette zone, comme s'il roulait sur du sol sec. Il n'est donc pas utile de réaliser cette partie de la bande de roulement dans une composition caoutchouteuse de meilleure adhérence sur sol mouillé dont les performances sur sol sec sont moindres que celles d'une composition caoutchouteuse de meilleure adhérence sur sol sec. Le pneumatique « Pilot Sport 2 » vendu par Michelin est un exemple d'un pneumatique dans la bande de roulement duquel les compositions caoutchouteuses sont disposées de cette manière.

Malgré les bonnes performances de ce pneumatique en termes d'adhérence, il existe toujours un besoin grandissant d'améliorer le compromis d'adhérence sur sol sec et sur sol mouillé des pneumatiques et plus particulièrement, des pneumatiques adaptés à une conduite routière sportive. C'est pourquoi, la demanderesse a proposé, dans ses demandes de brevet WO 2011/076680 A1 et WO 2012/175444 A1, de découper la bande de roulement en plusieurs zones axiales et de répartir les compositions caoutchouteuses de meilleure adhérence sur sol mouillé et lescompositions caoutchouteuses de meilleure adhérence sur sol sec de manière astucieuse sur ces zones. Si ces solutions ont permis d'obtenir un meilleur compromis sur sol sec et sur sol mouillé, elles ne sont cependant pas optimales en termes d'adhérence sur sol mouillé.

### RESUME DE L'INVENTION

Un des objectifs de la présente invention est donc de prévoir un pneumatique pour une conduite routière sportive ayant une meilleure adhérence sur sol mouillé tout en maintenant une excellente adhérence sur sol sec.

Cet objectif est atteint par un pneumatique destiné à être monté sur une jante de montage d'une roue d'un véhicule et ayant un sens de montage, sur le véhicule, prédéterminé, comportant une bande de roulement s'étendant entre un bord axial extérieur et un bord axial intérieur, le bord axial intérieur étant le bord destiné à être monté du côté de la caisse du véhicule lorsque le pneumatique est monté sur le véhicule selon ledit sens de montage prédéterminé. La bande de roulement comporte au moins une nervure centrale et deux nervures latérales, les nervures latérales étant disposées de part et d'autre de ladite au moins une nervure centrale, les nervures étant séparées par des rainures circonférentielles comportant chacune deux parois latérales. Chaque nervure centrale est délimitée axialement par une frontière extérieure et par une frontière intérieure, chaque frontière étant formée par une paroi latérale d'une rainure circonférentielle, la frontière intérieure étant axialement plus proche du bord axial intérieur de la bande de roulement que la frontière extérieure, la distance axiale, sur la surface de roulement à l'état neuf (c'est-à-dire non usé), entre la frontière extérieure et la frontière intérieure définissant la largeur axiale LC de la nervure centrale. Les nervures latérales sont réalisées dans au moins une première composition caoutchouteuse, cette au moins une première composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante ; cette composition caoutchouteuse permet d'obtenir de bonnes performances en freinage sur sol mouillé. Au moins une des nervures centrales comporte une portion réalisée dans au moins une deuxième composition caoutchouteuse, cette au moins une deuxième composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, ladite portion s'étendant de la frontière extérieure de la nervure centrale axialement dans la direction du bord axial intérieur de la bande de roulement (c'est-à-dire axialement vers l'intérieur si la frontière extérieure de la nervure centrale est axialement du même côté par rapport au plan médian du pneumatique que le bord axial extérieur de la bande de roulement, et axialement vers l'extérieur si la frontière extérieure de la nervure centrale est axialement du même côté par rapport au plan médian du pneumatique que le bord axial intérieur de la bande de roulement), la largeur axiale de ladite portion étant, sur toute la profondeur radiale de la nervure centrale, supérieure ou égale à 20% de la largeur axiale LC de la nervure centrale. Ladite au moins une première composition caoutchouteuse a une valeur tan δ0 qui est supérieure à la valeur tan δ0 de ladite au moins une deuxième composition caoutchouteuse, où tan δ0 désigne la valeur de tan δ mesurée à la température de 0° C et sous une contrainte de 0.7 MPa.

De préférence, ledit pourcentage du noir de carbone en poids de la totalité de la charge renforçante n'est pas le même pour ladite première composition caoutchouteuse et ladite deuxième composition caoutchouteuse ; la différence entre le pourcentage de noir de carbone de ladite première composition caoutchouteuse et le pourcentage de noir de carbone de ladite deuxième composition caoutchouteuse est de préférence supérieure à 5 points et encore plus préférentiellement supérieure à 10 points.

Ce pneumatique permet d'obtenir une nette amélioration en adhérence sur sol mouillé tout en conservant son adhérence sur sol sec.

Selon un premier mode de réalisation avantageux, le pneumatique comporte une pluralité de nervures centrales et au moins deux des nervures centrales comportent une portion réalisée dans ladite au moins une deuxième composition caoutchouteuse, ladite portion s'étendant de la frontière extérieure de la nervure centrale axialement dans la direction du bord axial intérieur de la bande de roulement, la largeur axiale de ladite portion étant, sur toute la profondeur radiale de la nervure centrale, supérieure ou égale à 20% de la largeur axiale LC de la nervure centrale. Le fait de prévoir une pluralité de nervures centrales permet notamment d'améliorer le comportement du pneumatique sur sol mouillé, car l'augmentation du nombre de rainures permet une meilleure évacuation de l'eau sur la chaussée.

Selon un deuxième mode de réalisation avantageux, le pneumatique comporte une pluralité de nervures centrales et toutes les nervures centrales comportent une portion réalisée dans ladite au moins une deuxième composition caoutchouteuse, ladite portion s'étendant de la frontière extérieure de la nervure centrale axialement dans la direction du bord axial intérieur de la bande de roulement, la largeur axiale de ladite portion étant, sur toute la profondeur radiale de la nervure centrale, supérieure ou égale à 20% de la largeur axiale LC de la nervure centrale.

Selon un troisième mode de réalisation avantageux toutes nervures centrales sont composées totalement de ladite au moins une deuxième composition caoutchouteuse. Ce mode de réalisation se distingue notamment par sa facilité de mise en oeuvre industrielle.

Selon un quatrième mode de réalisation avantageux, la largeur axiale de ladite portion est, sur toute la profondeur radiale de la nervure centrale, inférieure ou égale à 60% de la largeur axiale LC de la nervure centrale, le reste de ladite au moins une nervure centrale étant composée d'au moins une troisième composition caoutchouteuse, cette au moins une troisième composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante, ladite au moins une troisième composition caoutchouteuse ayant une valeur tan δ0 qui est supérieure à la valeur tan δ0 de ladite au moins une deuxième composition caoutchouteuse, les valeurs tan δ0 étant mesurées à la température de 0° C et sous une contrainte de 0.7 MPa.

Selon un cinquième mode de réalisation avantageux, la différence entre la valeur tan δ0 de ladite au moins une première composition caoutchouteuse et la valeur tan δ0 de ladite au moins une deuxième composition caoutchouteuse est supérieure ou égale à 0.05.

Selon un sixième mode de réalisation avantageux, ladite au moins une première composition caoutchouteuse a en outre une valeur tan δ10 qui est inférieure à la valeur tan δ10 de ladite au moins une deuxième composition caoutchouteuse, où tan δ10 désigne la valeur de tan δ mesurée à la température de 10° C et sous une contrainte de 0.7 MPa.

Préférentiellement, la différence entre la valeur tan δ10 de ladite au moins une première composition caoutchouteuse et la valeur tan δ10 de ladite au moins une deuxième composition caoutchouteuse est supérieure ou égale à 0.05.

Bien entendu, il est possible et même souhaitable de combiner deux ou plusieurs des modes de réalisations décrits.

### BREVE DESCRIPTION DES DESSINS

La figure 1 représente un pneumatique selon l'art antérieur.
La figure 2 représente une vue en perspective partielle d'un pneumatique selon l'art antérieur.
La figure 3 représente, en coupe radiale, un quart d'un pneumatique selon l'art antérieur.
Les figures 4 et 5 illustrent comment le bord axial d'une bande de roulement est déterminé.
La figure 6 illustre les termes 'bord intérieur' et 'bord extérieur' d'une bande de roulement.
La figure 7 représente schématiquement le sommet d'un pneumatique selon l'art antérieur, en coupe radiale.
La figure 8 illustre les différentes grandeurs caractérisant une nervure centrale.
Les figures 9 à 14 représentent schématiquement le sommet d'un pneumatique selon l'invention, en coupe radiale.

### DESCRIPTION DETAILLEE DES DESSINS

Dans l'emploi du terme « radial » il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet.

Une direction « circonférentielle » est une direction qui est perpendiculaire à la fois à un rayon du pneumatique et à la direction axiale. Une « section circonférentielle » est une section selon un plan perpendiculaire à l'axe de rotation du pneumatique.

Par « surface de roulement » on entend ici l'ensemble des points de la bande de roulement d'un pneumatique qui sont susceptibles d'entrer en contact avec le sol lorsque le pneumatique roule.

L'expression « composition caoutchouteuse » désigne une composition de caoutchouc comportant au moins un élastomère et une charge.

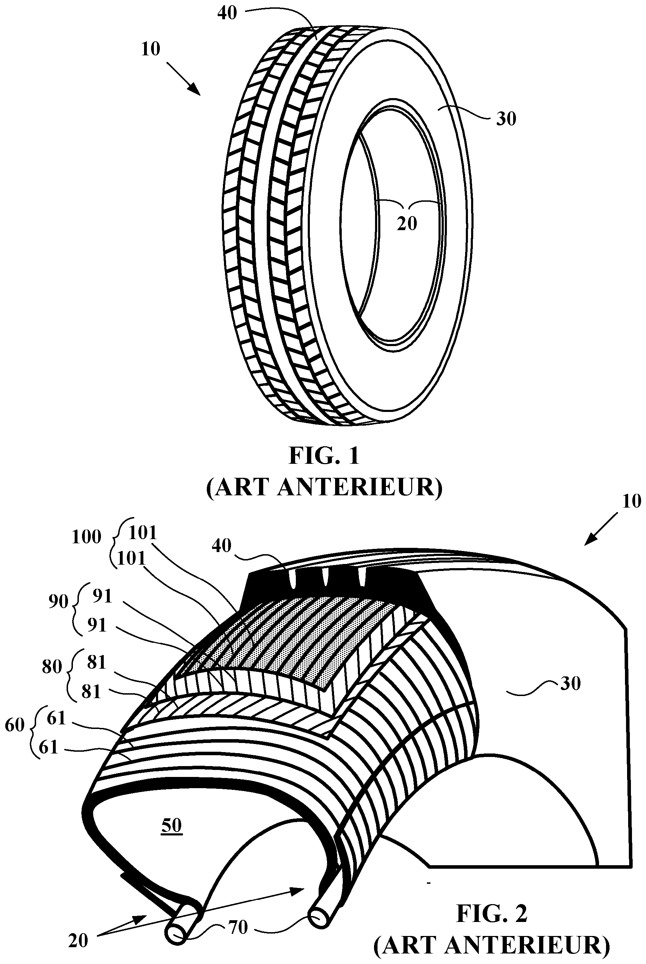

La figure 1 représente schématiquement un pneumatique 10 selon l'art antérieur. Le pneumatique 10 comporte un sommet comprenant une armature de sommet (invisible à la figure 1) surmontée d'une bande de roulement 40, deux flancs 30 prolongeant le sommet radialement vers l'intérieur, ainsi que deux bourrelets 20 radialement intérieurs aux flancs 30.

La figure 2 représente schématiquement une vue en perspective partielle d'un pneumatique 10 selon l'art antérieur et illustre les différentes composantes du pneumatique. Le pneumatique 10 comprend une armature de carcasse 60 constituée de fils 61 enrobés de composition caoutchouteuse, et deux bourrelets 20 comportant chacun des structures annulaires de renforcement 70 qui maintiennent le pneumatique 10 sur la jante (non représentée). L'armature de carcasse 60 est ancrée dans chacun des bourrelets 20. Le pneumatique 10 comporte en outre une armature de sommet comprenant deux nappes 80 et 90. Chacune des nappes 80 et 90 est renforcée par des éléments de renforcement 81 et 91 filaires qui sont parallèles dans chaque couche et croisés d'une couche à l'autre, en faisant avec la direction circonférentielle des angles compris entre 10° et 70°. Le pneumatique comporte encore une armature de frettage 100, disposée radialement à l'extérieur de l'armature de sommet, cette armature de frettage étant formée d'éléments de renforcement 101 orientés circonférentiellement et enroulés en spirale. Une bande de roulement 40 est posée sur l'armature de frettage ; c'est cette bande de roulement 40 qui assure le contact du pneumatique 10 avec la route. Le pneumatique 10 représenté est un pneu « tubeless » : il comprend une « gomme intérieure » 50 en composition caoutchouteuse imperméable au gaz de gonflage, recouvrant la surface intérieure du pneumatique.

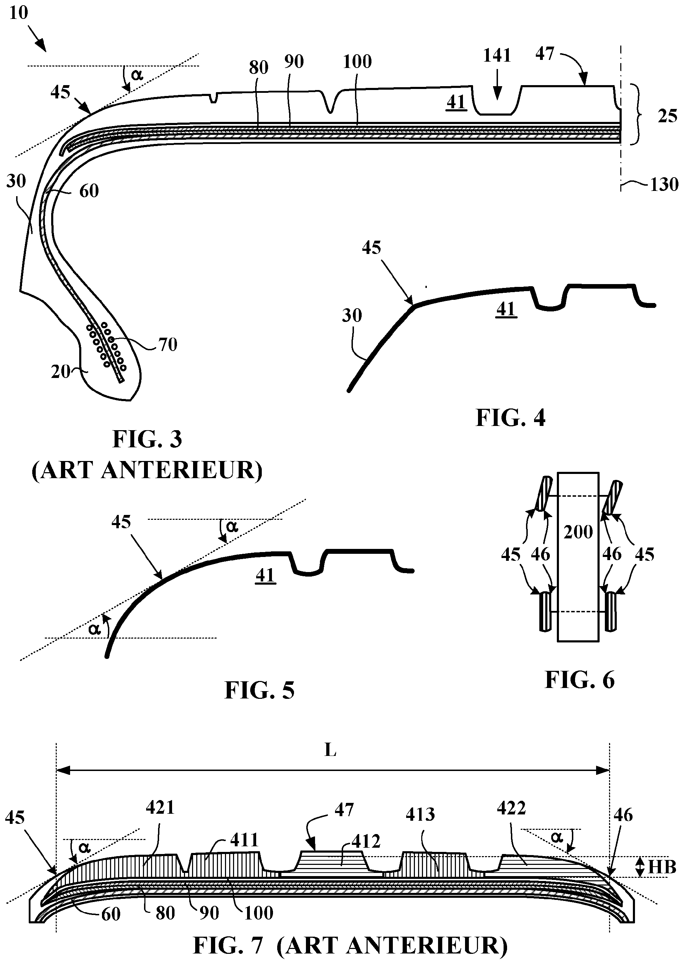

La figure 3 représente schématiquement, en coupe radiale, un quart d'un pneumatique 10 de référence, de type « Pilot Sport 2 » vendu par Michelin. Le pneumatique 10 comporte deux bourrelets 20 destinés à entrer en contact avec une jante de montage (non représentée), chaque bourrelet 20 comportant une pluralité de structures annulaires de renforcement 70. Deux flancs 30 prolongent les bourrelets 20 radialement vers l'extérieur et s'unissent dans un sommet 25 comprenant une armature de sommet formée d'une première couche d'éléments de renforcement 80 et d'une deuxième couche d'éléments de renforcement 90, et surmontée radialement d'une armature de frettage 100, qui est elle-même surmontée radialement d'une bande de roulement. Le plan médian du pneumatique est indiqué par la référence 130.

La manière dont on détermine les bords axiaux d'une bande de roulement est illustrée aux figures 4 et 5 qui montrent chacune le profil d'une demi-bande de roulement 41 et de la partie du flanc qui lui est adjacente. Dans certaines architectures de pneumatique, la transition de la bande de roulement vers le flanc est très nette, comme dans le cas représenté à la figure 4 et la détermination du bord axial 45 de la demi-bande de roulement 41 est intuitive. Il existe cependant des architectures de pneumatique où la transition entre bande de roulement et flanc est continue. Un exemple est représenté à la figure 5. On détermine alors le bord de la bande de roulement comme suit. On trace, dans une coupe radiale du pneumatique, la tangente à la surface de roulement du pneumatique en tout point de la surface de roulement dans la zone de transition entre la bande de roulement et le flanc. Le bord axial est le point dans lequel l'angle α (alpha) entre ladite tangente et une direction axiale est égal à 30°. Lorsqu'il existe plusieurs points pour lesquels l'angle α (alpha) entre ladite tangente et une direction axiale est égal à 30°, on retient le point radialement le plus à l'extérieur. Dans le cas du pneumatique représenté à la figure 3, le bord axial 45 a été déterminé de cette manière.

Chaque couche d'éléments de renforcement 80 et 90 comprend des éléments de renforcement filaires, enrobés dans une matrice formée de composition caoutchouteuse. Les éléments de renforcement de chaque couche sont substantiellement parallèles entre eux ; les éléments de renforcement des deux couches sont croisés d'une couche à l'autre selon un angle d'environ 20°, comme cela est bien connu de la personne du métier pour les pneumatiques dits radiaux.

Le pneumatique 10 comporte encore une armature de carcasse 60 qui s'étend depuis les bourrelets 20 à travers les flancs 30 jusqu'au sommet 25. Cette armature de carcasse 60 comporte ici des éléments de renforcement filaires orientés substantiellement radialement, c'est-à-dire faisant avec la direction circonférentielle un angle supérieur ou égal à 80° et inférieur ou égal à 90°.

L'armature de carcasse 60 comporte une pluralité d'éléments de renforcement de carcasse ; elle est ancrée dans les deux bourrelets 20 entre les structures annulaires de renforcement 70.

La figure 7 représente schématiquement le sommet d'un pneumatique selon le document WO 2011/076680 A1, destiné à être monté sur une jante de montage d'une roue d'un véhicule et ayant un sens de montage, sur le véhicule, prédéterminé. Il comporte une bande de roulement s'étendant entre un bord axial extérieur 45 et un bord axial intérieur 46, le bord axial intérieur étant le bord destiné à être monté du côté de la caisse du véhicule lorsque le pneumatique est monté sur le véhicule selon ledit sens de montage prédéterminé, comme cela est suggéré à la figure 6 qui représente schématiquement un véhicule 200. La surface de roulement est indiquée par la référence 47.

La bande de roulement comporte trois nervures centrales 411 à 413 et deux nervures latérales 421 et 422 disposées de part et d'autre des nervures centrales. Les nervures sont séparées par des rainures circonférentielles comportant chacune deux parois latérales.

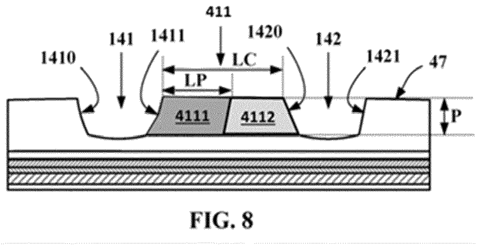

La figure 8 illustre les différentes grandeurs caractérisant une nervure centrale 411. Cette nervure est délimitée axialement par une frontière extérieure et une frontière intérieure. La frontière extérieure est formée par la paroi latérale 1411 de la rainure circonférentielle 141 ; elle est axialement plus proche du bord axial extérieur 45 (non représenté) de la bande de roulement que la frontière intérieure. La frontière intérieure est formée par la paroi latérale 1420 de la rainure circonférentielle 142 ; elle est axialement plus proche du bord axial intérieur 46 (non représenté) de la bande de roulement que la frontière extérieure. La distance axiale, sur la surface de roulement 47 à l'état neuf, entre la frontière extérieure et la frontière intérieure définit la largeur axiale LC de la nervure centrale.

Dans le sommet représenté à la figure 7, la nervure centrale 412 et la nervure latérale 422 sont réalisées dans une première composition caoutchouteuse comportant un élastomère et au moins une charge renforçante dont éventuellement un noir de carbone, le noir de carbone représentant un pourcentage supérieur ou égal à 0 % et inférieur ou égal à 50 % du poids de la totalité de la charge renforçante,

En revanche, la nervure latérale 421 et les nervures centrales 411 et 413 sont réalisées dans une deuxième composition caoutchouteuse comportant un élastomère et au moins une charge renforçante dont un noir de carbone, le noir de carbone représentant un pourcentage supérieur ou égal à 50 % et inférieur ou égal à 100 % du poids de la totalité de la charge renforçante.

La première composition caoutchouteuse a une valeur tan δ0 qui est supérieure à la valeur tan δ0 de la deuxième composition caoutchouteuse.

Les nervures centrales 411 et 413 sont entièrement réalisées dans cette deuxième composition caoutchouteuse ; autrement dit, pour chacune de ces nervures, la portion réalisée dans cette deuxième composition caoutchouteuse s'étend de la frontière extérieure de chaque nervure centrale axialement dans la direction du bord axial intérieur de la bande de roulement, la largeur axiale de ladite portion étant, sur toute la profondeur radiale de la nervure centrale, égale à 100% de la largeur axiale LC de la nervure centrale.

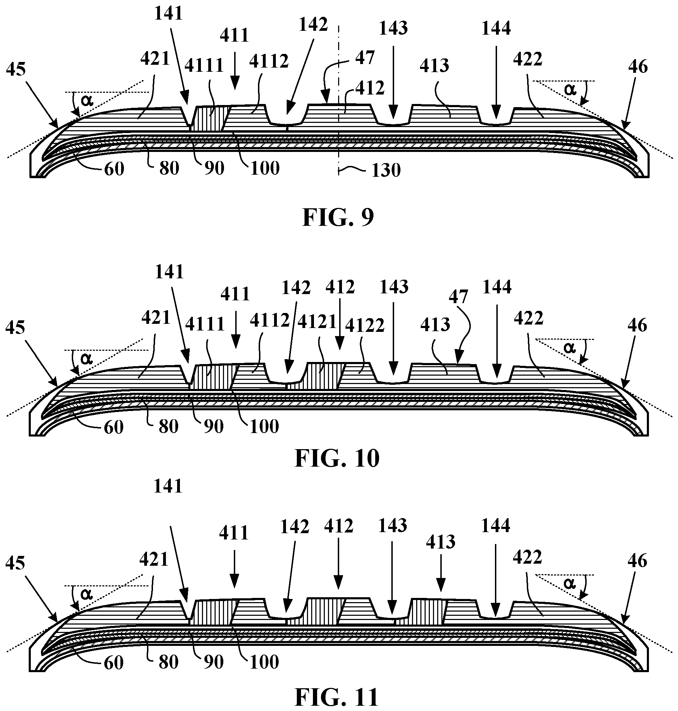

Si cette solution a permis d'obtenir un excellent compromis sur sol sec et sur sol mouillé, elle reste perfectible en termes d'adhérence sur sol mouillé. Une telle amélioration est obtenue avec un pneumatique selon l'invention. Les figures 9 à 14 représentent des modes de réalisation de ce pneumatique.

Le pneumatique dont le sommet est représenté à la figure 9 est destiné à être monté sur une jante de montage d'une roue d'un véhicule (non représentée) ; il a un sens de montage, sur le véhicule, prédéterminé, et comporte une bande de roulement s'étendant entre un bord axial extérieur 45 et un bord axial intérieur 46, le bord axial intérieur 46 étant le bord destiné à être monté du côté de la caisse du véhicule lorsque le pneumatique est monté sur le véhicule selon ledit sens de montage prédéterminé (voir figure 6).

La bande de roulement comporte trois nervures centrales 411 à 413 et deux nervures latérales 421 et 422, les nervures latérales étant disposées de part et d'autre des nervures centrales. Les nervures sont séparées par des rainures circonférentielles 141 à 144 comportant chacune deux parois latérales.

Comme cela a été expliqué à l'aide de la figure 8, chaque nervure centrale est délimitée axialement par une frontière extérieure et par une frontière intérieure, chaque frontière étant formée par une paroi latérale d'une rainure circonférentielle, la frontière intérieure étant axialement plus proche du bord axial intérieur de la bande de roulement que la frontière extérieure , la distance axiale, sur la surface de roulement à l'état neuf, entre la frontière extérieure et la frontière intérieure définissant la largeur axiale LC de la nervure centrale.

Les nervures latérales 421 et 422 ainsi que les nervures centrales 412 et 413 du pneumatique représenté à la figure 9 sont entièrement réalisées dans une première composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante.

En revanche, la nervure centrale 411 comporte une portion 4111 réalisée dans la deuxième composition caoutchouteuse, cette au moins une deuxième composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante. Cette portion s'étend de la frontière extérieure de la nervure centrale axialement vers l'intérieur, la largeur axiale LP de ladite portion (voir figure 8) étant, sur toute la profondeur radiale de la nervure centrale, de l'ordre de 40 à 50% de la largeur axiale LC de la nervure centrale 411.

De nouveau, la première composition caoutchouteuse a une valeur tan δ0 qui est supérieure à la valeur tan δ0 de ladite au moins une deuxième composition caoutchouteuse.

Ce pneumatique selon l'invention permet d'améliorer l'adhérence sur sol mouillé du pneumatique de référence, tout en conservant son potentiel d'adhérence sur sol sec. La demanderesse explique cette découverte surprenante de la manière suivante : Dans un pneumatique selon l'invention, contrairement au pneumatique de référence, la nervure latérale extérieure est réalisée dans une composition caoutchouteuse conférant une bonne adhérence sur sol mouillé. Cela va à l'encontre de l'enseignement du document WO 2011/076680 qui enseigne de réaliser la nervure extérieure dans une composition caoutchouteuse conférant une bonne adhérence sur sol sec, afin de profiter de la forme trapézoïdale de l'aire de contact. Or, lors du roulage en dérive sévère (c'est-à-dire dans des conditions rencontrées lors d'un roulage sur circuit), on observe un phénomène de cloquage sur une partie significative de la nervure latérale extérieure, ce qui fait que la composition caoutchouteuse conférant une bonne adhérence sur sol sec n'est pas en mesure d'apporter tout le gain escompté à cet endroit. En plaçant cette composition caoutchouteuse sur le bord extérieur d'une ou plusieurs nervures centrales, on obtient à la fois une bonne adhérence sur sol sec et une protection des nervures centrales contre l'usure prématurée. Le fait de disposer une composition caoutchouteuse conférant une bonne adhérence sur sol mouillé sur la nervure latérale extérieure s'avère payant car le freinage en ligne droite sur sol mouillé est très significativement amélioré.

La figure 10 représente schématiquement le sommet d'un autre pneumatique selon l'invention. A la différence du pneumatique représenté à la figure 9, ce pneumatique comporte deux nervures centrales 411 et 412 comportant chacune une portion réalisée dans la deuxième composition caoutchouteuse (les portions 4111 et 4121, respectivement).

Bien entendu, on peut également prévoir que toutes les nervures centrales 411 à 413 comportent une telle portion, comme c'est le cas pour le pneumatique selon l'invention représenté à la figure 11.

Dans les figures 9 à 11 la portion réalisée dans la deuxième composition caoutchouteuse se trouve sur les nervures centrales les plus proches du bord axial extérieur 45 car ce sont ces nervures centrales qui sont davantage exposées à l'usure et le fait de prévoir la deuxième composition caoutchouteuse sur ces nervures centrales a pour effet de les protéger contre l'usure.

Néanmoins, on pourrait parfaitement disposer cette portion uniquement sur la nervure centrale 413 ou sur les nervures centrales 412 et 413 etc. C'est par souci de concision que ces modes de réalisation a priori moins avantageux du point de vue de l'usure n'ont pas été représentés.

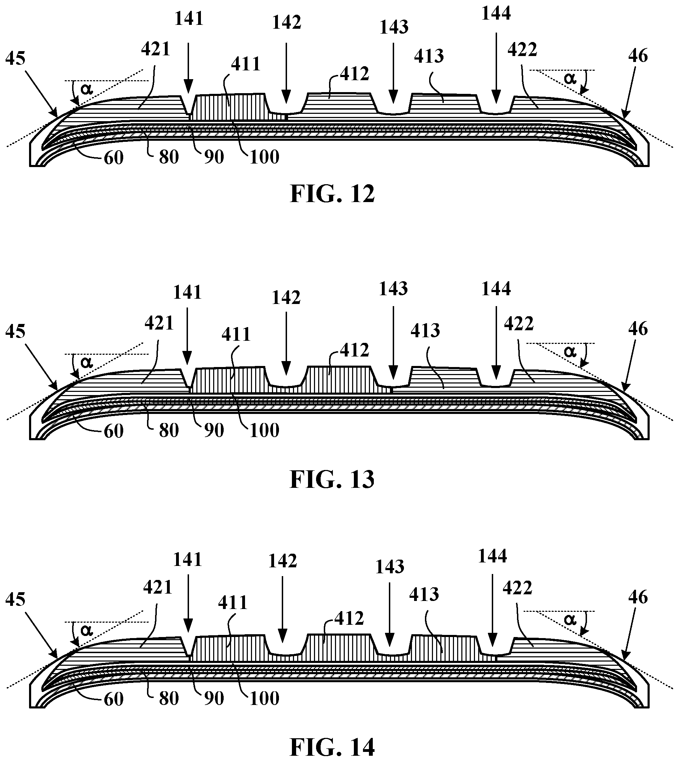

Les figures 12 à 14 représentent schématiquement trois autres modes de réalisation du pneumatique selon l'invention. Ici, l'une (figure 12), deux (figure 13) ou même toutes les nervures centrales (figure 14) sont réalisées entièrement dans la deuxième composition caoutchouteuse. Là encore, il n'est pas nécessaire que ce soient les nervures les plus proches du bord axial extérieur qui sont concernées, mais par souci de concision nous avons limité le nombre de modes de réalisation représentés. De même, la personne du métier comprendra qu'il est possible de prévoir que certaines des nervures centrales de la bande de roulement sont réalisées entièrement dans la deuxième composition caoutchouteuse et d'autres le sont uniquement en partie.

La personne du métier comprendra également que l'invention n'est nullement limitée à un pneumatique comportant trois nervures centrales ; on peut parfaitement imaginer des modes de réalisation comportant une, deux ou plus de trois nervures centrales.

Le Tableau I donne, à titre d'exemple, la composition de compositions caoutchouteuses pouvant être utilisés. La composition est donnée en pce (« pour cent élastomère »), c'est-à-dire en parties en poids pour 100 parties en poids d'élastomère.

**Tableau I**

| | Première composition caoutchouteuse | Deuxième composition caoutchouteuse |
|---|---|---|
| Elastomère SBR [1] | 100 | 100 |
| N 234 [2] | - | 100 |
| Silice | 100 | - |
| Agent de couplage TESPT (Si 69 Degussa) | 8.0 | - |
| Plastifiant [3] | 50 | 50 |
| Cire anti-ozone C32 ST | 1.5 | 1.5 |
| Agent antioxydant (6PPD) [4] | 2.0 | 2.0 |
| Diphénylguanidine (DPG) | 1.7 | - |
| ZnO | 1.8 | 1.8 |
| Acide stéarique | 2.0 | 2.0 |
| Soufre | 1.3 | 1.3 |
| Accélérateur (CBS) | 1.95 | 1.95 |

| | | |
|---|---|---|
| Annotations au Tableau I : [1] SSBR avec 40 % de styrène, 48 % de motifs polybutadiène 1-4 trans [2] Noir de carbone série 230 (ASTM) [3] Huile TDAE (« treated distillate aromatic extract ») [4] N-(1,3-diméthylbutyl)-N'-phényl-p-phénylènediamine | | |

Les compositions caoutchouteuses sont préférentiellement à base d'au moins un élastomère diénique, une charge renforçante et un système de réticulation.

Par élastomère (ou indistinctement caoutchouc) « diénique », on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. L'élastomère diénique utilisé est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène-styrène (SIR), les copolymères de butadiène-styrène-isoprène (SBIR) et les mélanges de ces élastomères.

Un mode de réalisation préférentiel consiste à utiliser un élastomère « isoprénique », c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR (E-SBR ou S-SBR) utilisé en coupage ou non avec un autre élastomère, par exemple du type BR.

La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non aromatique (notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C), des agents facilitant la mise en oeuvre (processabilité) des compositions à l'état cru, des résines tackifiantes, un système de réticulation à base soit de soufre, soit de donneurs de soufre et/ou de peroxyde, des accélérateurs, des activateurs ou retardateurs de vulcanisation, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt ou de nickel.

Les premier et troisième compositions caoutchouteuses contiennent au moins un élastomère et au moins une charge renforçante comportant un noir de carbone, le noir de carbone représentant un pourcentage PN1 supérieur ou égal à 50 % et inférieur ou égal à 100 % du poids de la totalité de la charge renforçante, et que le deuxième composition caoutchouteuse contient au moins un élastomère et au moins une charge renforçante, dont éventuellement un noir de carbone, le noir de carbone représentant un pourcentage PN2 supérieur ou égal à 0 % et inférieur ou égal à 50 % du poids de la totalité de la charge renforçante.

Les compositions sont fabriquées dans des mélangeurs appropriés, en utilisant deux phases de préparation successives bien connues de l'homme du métier : une première phase de travail ou malaxage thermomécanique (phase dite « non productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, phase de finition au cours de laquelle est incorporé le système de réticulation.

A titre d'exemple, la phase non productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement du mélange ainsi obtenu, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

La vulcanisation (ou cuisson) peut être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

Le Tableau II donne les propriétés des compositions caoutchouteuses dont la composition est indiquée au Tableau I.

**Tableau II**

| | Première composition caoutchouteuse | Deuxième composition caoutchouteuse |
|---|---|---|
| tan δ0, à 0.7 MPa | 0.88 | 0.76 |
| tan δ10, à 0.7 MPa | 0.58 | 0.69 |

Ces propriétés sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, lors d'un balayage en température entre 0° et 100°C, sous une contrainte fixe de 0,7 MPa, on enregistre notamment la valeur de tan δ observée à 0°C et les valeurs de tan δ observées à 10°C.

On rappelle que, de manière bien connue de l'homme du métier, la valeur de tan δ à 0°C (« tan δ0 ») est représentative du potentiel d'adhérence sur sol mouillé : plus tan δ à 0°C est élevée, meilleure est l'adhérence. Les valeurs de tan δ aux températures supérieures à 10°C sont représentatives de l'hystérèse du matériau et du potentiel d'adhérence sur sol sec.

Pour revenir aux mélanges dont la composition est indiquée au Tableau I, on constate que la première composition présente une valeur de tan δ à 0°C (contrainte imposée 0.7 MPa) plus élevée par rapport à la deuxième composition, indiquant que l'adhérence sur sol mouillé sera supérieure ; et une valeur de tan δ à 10°C (« tan δ10 ») plus faible par rapport à la deuxième composition, indiquant que l'adhérence sur sol sec sera inférieure.

Des essais ont été effectués sur un véhicule BMW 330i équipé de pneumatiques Pilot Super Sport de dimension 235/35 R19. Un pneumatique équipé d'une bande de roulement telle que représentée à la figure 9 a été comparé à un pneumatique dé référence équipé d'une bande de roulement telle que représentée à la figure 7. Les compositions caoutchouteuses du Tableau I ont été utilisées. Les pneumatiques selon l'invention ont permis de maintenir le temps au tour (circuit de Charade (France) ; longueur de circuit : 4 km) sur sol sec. Le freinage sur sol mouillé, en revanche, est significativement amélioré (de 3%), alors qu'il n'y a pas de différence en freinage sur sol sec.

## Revendications

1. Pneumatique (10) destiné à être monté sur une jante de montage d'une roue d'un véhicule et ayant un sens de montage, sur le véhicule, prédéterminé, comportant une bande de roulement (40) s'étendant entre un bord axial extérieur (45) et un bord axial intérieur (46), le bord axial intérieur (46) étant le bord destiné à être monté du côté de la caisse du véhicule lorsque le pneumatique est monté sur le véhicule selon ledit sens de montage prédéterminé ;
dans lequel la bande de roulement (40) comporte au moins une nervure centrale (411-413) et deux nervures latérales (421, 422), les nervures latérales étant disposées de part et d'autre de ladite au moins une nervure centrale, les nervures étant séparées par des rainures circonférentielles (141-144) comportant chacune deux parois latérales (1411, 1420) ;
dans lequel chaque nervure centrale (411-413) est délimitée axialement par une frontière extérieure et par une frontière intérieure, chaque frontière étant formée par une paroi latérale d'une rainure circonférentielle, la frontière intérieure étant axialement plus proche du bord axial intérieur de la bande de roulement que la frontière extérieure , la distance axiale, sur la surface de roulement à l'état neuf, entre la frontière extérieure et la frontière intérieure définissant la largeur axiale (LC) de la nervure centrale ;
dans lequel les nervures latérales (421, 422) sont réalisées dans au moins une première composition caoutchouteuse, cette au moins une première composition caoutchouteuse comportant au moins un élastomère et au moins une charge renforçante, dont éventuellement un noir de carbone, le noir de carbone représentant un pourcentage supérieur ou égal à 0 % et inférieur à 50 % du poids de la totalité de la charge renforçante ;
dans lequel au moins une des nervures centrales (411-413) comporte une portion (4111, 4121) réalisée dans au moins une deuxième composition caoutchouteuse, cette au moins une deuxième composition caoutchouteuse comportant au moins un élastomère et au moins une charge renforçante comportant un noir de carbone, le noir de carbone représentant un pourcentage supérieur ou égal à 50 % et inférieur ou égal à 100 % du poids de la totalité de la charge renforçante, ladite portion s'étendant de la frontière extérieure de la nervure centrale axialement dans la direction du bord axial intérieur de la bande de roulement, la largeur axiale (LP) de ladite portion étant, sur toute la profondeur radiale de la nervure centrale, supérieure ou égale à 20% de la largeur axiale LC de la nervure centrale ;
**caractérisé en ce que** ladite au moins une première composition caoutchouteuse a une valeur tan δ0 qui est supérieure à la valeur tan δ0 de ladite au moins une deuxième composition caoutchouteuse, où tan δ0 désigne la valeur de tan δ mesurée à la température de 0° C et sous une contrainte de 0.7 MPa.

2. Pneumatique selon la revendication 1, dans lequel le pneumatique comporte une pluralité de nervures centrales (411-413) et au moins deux des nervures centrales comportent une portion réalisée dans ladite au moins une deuxième composition caoutchouteuse, ladite portion s'étendant de la frontière extérieure de la nervure centrale axialement dans la direction du bord axial intérieur de la bande de roulement, la largeur axiale de ladite portion étant, sur toute la profondeur radiale de la nervure centrale, supérieure ou égale à 20% de la largeur axiale LC de la nervure centrale.

3. Pneumatique selon la revendication 1, dans lequel le pneumatique comporte une pluralité de nervures centrales (411-413) et toutes les nervures centrales comportent une portion réalisée dans ladite au moins une deuxième composition caoutchouteuse, ladite portion s'étendant de la frontière extérieure de la nervure centrale axialement dans la direction du bord axial intérieur de la bande de roulement, la largeur axiale de ladite portion étant, sur toute la profondeur radiale de la nervure centrale, supérieure ou égale à 20% de la largeur axiale LC de la nervure centrale.

4. Pneumatique selon la revendication 3, dans lequel toutes nervures centrales (411-413) sont composées totalement de ladite au moins une deuxième composition caoutchouteuse.

5. Pneumatique selon l'une quelconque des revendications 1 à 3, dans lequel la largeur axiale (LP) de ladite portion est, sur toute la profondeur radiale de la nervure centrale, inférieure ou égale à 60% de la largeur axiale LC de la nervure centrale, le reste de ladite au moins une nervure centrale étant composée d'au moins une troisième composition caoutchouteuse, cette au moins une troisième composition caoutchouteuse comportant au moins un élastomère et au moins une charge renforçante, dont éventuellement un noir de carbone, le noir de carbone représentant un pourcentage supérieur ou égal à 0 % et inférieur ou égal à 50 % du poids de la totalité de la charge renforçante, ladite au moins une troisième composition caoutchouteuse ayant une valeur tan δ0 qui est supérieure à la valeur tan δ0 de ladite au moins une deuxième composition caoutchouteuse.

6. Pneumatique selon l'une quelconque des revendications 1 à 5, dans lequel la différence entre la valeur tan δ0 de ladite au moins une première composition caoutchouteuse et la valeur tan δ0 de ladite au moins une deuxième composition caoutchouteuse est supérieure ou égale à 0.05.

7. Pneumatique selon l'une quelconque des revendications 1 à 6, dans lequel ladite au moins une première composition caoutchouteuse a en outre une valeur tan δ10 qui est inférieure à la valeur tan δ10 de ladite au moins une deuxième composition caoutchouteuse, où tan δ10 désigne la valeur de tan δ mesurée à la température de 10° C et sous une contrainte de 0.7 MPa.

8. Pneumatique selon la revendication 7, dans lequel la différence entre la valeur tan δ10 de ladite au moins une première composition caoutchouteuse et la valeur tan δ10 de ladite au moins une deuxième composition caoutchouteuse est supérieure ou égale à 0.05.

## Patentansprüche

1. Luftreifen (10), der dazu bestimmt ist, auf eine Montagefelge eines Rades eines Kraftfahrzeugs montiert zu werden, und eine vorgegebene Montagerichtung am Fahrzeug hat, umfassend einen Laufstreifen (40), der sich zwischen einem axialen Außenrand (45) und einem axialen Innenrand (46) erstreckt, wobei der axiale Innenrand (46) der Rand ist, der dazu bestimmt ist, auf der Karosserieseite des Fahrzeugs montiert zu sein, wenn der Luftreifen entsprechend der vorgegebenen Montagerichtung am Fahrzeug montiert ist;
wobei der Laufstreifen (40) mindestens eine zentrale Rippe (411-413) und zwei seitliche Rippen (421, 422) aufweist, wobei die seitlichen Rippen beidseits der mindestens einen zentralen Rippe angeordnet sind, wobei die Rippen durch Umfangsrillen (141-144) getrennt sind, von denen jede zwei Seitenwände (1411, 1420) aufweist; wobei jede zentrale Rippe (411-413) axial durch eine äußere Grenze und durch eine innere Grenze begrenzt wird, wobei jede Grenze durch eine Seitenwand einer Umfangsrille gebildet wird, wobei die innere Grenze dem axialen Innenrand des Laufstreifens näher ist als die äußere Grenze, wobei der axiale Abstand, auf der Lauffläche im Neuzustand, zwischen der äußeren Grenze und der inneren Grenze die axiale Breite (LC) der zentralen Rippe definiert;
wobei die zentralen Rippen (421, 422) aus mindestens einer ersten Kautschukzusammensetzung ausgeführt sind, wobei diese mindestens eine erste Kautschukzusammensetzung mindestens ein Elastomer und mindestens einen verstärkenden Füllstoff, darunter gegebenenfalls einen Ruß, umfasst, wobei der Ruß einen prozentualen Anteil von 0 % oder mehr und von weniger als 50 % des Gewichts der Gesamtheit des verstärkenden Füllstoffs ausmacht;
wobei mindestens eine der zentralen Rippen (411-413) einen Abschnitt (4111, 4121) aufweist, der aus mindestens einer zweiten Kautschukzusammensetzung ausgeführt ist, wobei diese mindestens eine zweite Kautschukzusammensetzung mindestens ein Elastomer und mindestens verstärkenden Füllstoff umfasst, der einen Ruß umfasst, wobei der Ruß einen prozentualen Anteil von mindestens 50 % und höchstens 100 % des Gewichts der Gesamtheit des verstärkenden Füllstoffs ausmacht, wobei sich der Abschnitt von der äußeren Grenze der zentralen Rippe axial in Richtung des axialen Innenrands des Laufstreifens erstreckt, wobei die axiale Breite (LP) des Abschnitts, über die gesamte radiale Tiefe der zentralen Rippe, mindestens 20 % der axialen Breite LC der zentralen Rippe beträgt;
**dadurch gekennzeichnet, dass** die mindestens eine erste Kautschukzusammensetzung einen Wert tan δ0 hat, der größer als der Wert tan δ0 der mindestens einen zweiten Kautschukzusammensetzung ist, wobei tan δ0 den Wert von tan δ bezeichnet, der bei der Temperatur 0 °C und unter einer Spannung von 0,7 MPa gemessen wird.

2. Luftreifen nach Anspruch 1, bei dem der Luftreifen eine Vielzahl von zentralen Rippen (411-413) aufweist und mindestens zwei der zentralen Rippen einen Abschnitt aufweisen, der aus der mindestens einen zweiten Kautschukzusammensetzung ausgeführt ist, wobei sich der Abschnitt von der äußeren Grenze der zentralen Rippe axial in Richtung des axialen Innenrands des Laufstreifens erstreckt, wobei die axiale Breite des Abschnitts, über die gesamte radiale Tiefe der zentralen Rippe, mindestens 20 % der axialen Breite LC der zentralen Rippe beträgt.

3. Luftreifen nach Anspruch 1, bei dem der Luftreifen eine Vielzahl von zentralen Rippen (411-413) aufweist und alle zentralen Rippen einen Abschnitt aufweisen, der aus der mindestens einen zweiten Kautschukzusammensetzung ausgeführt ist, wobei sich der Abschnitt von der äußeren Grenze der zentralen Rippe axial in Richtung des axialen Innenrands des Laufstreifens erstreckt, wobei die axiale Breite des Abschnitts, über die gesamte radiale Tiefe der zentralen Rippe, mindestens 20 % der axialen Breite LC der zentralen Rippe beträgt.

4. Luftreifen nach Anspruch 3, bei dem alle zentralen Rippen (411-413) vollständig aus der mindestens einen zweiten Kautschukzusammensetzung bestehen.

5. Luftreifen nach einem der Ansprüche 1 bis 3, bei dem die axiale Breite (LP) des Abschnitts, über die gesamte radiale Tiefe der zentralen Rippe, höchstens 60 % der axialen Breite LC der zentralen Rippe beträgt, wobei der Rest der mindestens einen zentralen Rippe aus mindestens einer dritten Kautschukzusammensetzung besteht, wobei diese mindestens eine dritte Kautschukzusammensetzung mindestens ein Elastomer und mindestens einen verstärkenden Füllstoff umfasst, darunter gegebenenfalls einen Ruß, wobei der Ruß einen prozentualen Anteil von 0 % oder mehr und höchstens 50 % des Gewichts der Gesamtheit des verstärkenden Füllstoffs ausmacht, wobei die mindestens eine dritte Kautschukzusammensetzung einen Wert tan δ0 hat, der größer als der Wert tan δ0 der mindestens einen zweiten Kautschukzusammensetzung ist.

6. Luftreifen nach einem der Ansprüche 1 bis 5, bei dem die Differenz zwischen dem Wert tan δ0 der mindestens einen ersten Kautschukzusammensetzung und der Wert tan δ0 der mindestens einen zweiten Kautschukzusammensetzung mindestens 0,05 beträgt.

7. Luftreifen nach einem der Ansprüche 1 bis 6, bei dem die mindestens eine erste Kautschukzusammensetzung ferner einen Wert tan δ10 aufweist, der kleiner als der Wert tan δ10 der mindestens einen zweiten Kautschukzusammensetzung ist, wobei tan δ10 den Wert von tan δ bezeichnet, der bei der Temperatur von 10 °C und unter einer Spannung von 0,7 MPa gemessen wird.

8. Luftreifen nach Anspruch 7, bei dem die Differenz zwischen dem Wert tan δ10 der mindestens einen ersten Kautschukzusammensetzung und dem Wert tan δ10 der mindestens einen zweiten Kautschukzusammensetzung mindestens 0,05 beträgt.

## Claims

1. Tyre (10) intended to be mounted on a mounting rim of a wheel of a vehicle and having a predetermined direction of mounting on the vehicle, comprising a tread (40) that extends between an outer axial edge (45) and an inner axial edge (46), the inner axial edge (46) being the edge intended to be mounted on the body side of the vehicle when the tyre is mounted on the vehicle in said predetermined direction of mounting;
in which the tread (40) comprises at least one central rib (411-413) and two side ribs (421, 422), the side ribs being positioned on either side of said at least one central rib, the ribs being separated by circumferential grooves (141-144) each comprising two side walls (1411, 1420);
in which each central rib (411-413) is delimited axially by an outer border and by an inner border, each border being formed by a side wall of a circumferential groove, the inner border being axially closer to the inner axial edge of the tread than the outer border, the axial distance, over the tread surface in the new state, between the outer border and the inner border defining the axial width (LC) of the central rib;
in which the side ribs (421, 422) are made from at least one first rubber composition, this at least one first rubber composition comprising at least one elastomer and at least one reinforcing filler, optionally including a carbon black, the carbon black representing a percentage of greater than or equal to 0% and less than 50% of the weight of all of the reinforcing filler;
in which at least one of the central ribs (411-413) comprises a portion (4111, 4121) made from at least one second rubber composition, this at least one second rubber composition comprising at least one elastomer and at least one reinforcing filler comprising a carbon black, the carbon black representing a percentage of greater than or equal to 50% and less than or equal to 100% of the weight of all of the reinforcing filler, said portion extending from the outer border of the central rib axially in the direction of the inner axial edge of the tread, the axial width (LP) of said portion being, over the entire radial depth of the central rib, greater than or equal to 20% of the axial width LC of the central rib;
**characterised in that** said at least one first rubber composition has a tan δ0 value which is greater than the tan δ0 value of said at least one second rubber composition, where tan δ0 denotes the tan δ value measured at a temperature of 0°C and under a stress of 0.7 mPa.

2. Tyre according to Claim 1, in which the tyre comprises a plurality of central ribs (411-413) and at least two of the central ribs comprise a portion made from said at least one second rubber composition, said portion extending from the outer border of the central rib axially in the direction of the inner axial edge of the tread, the axial width of said portion being, over the entire radial depth of the central rib, greater than or equal to 20% of the axial width LC of the central rib.

3. Tyre according to Claim 1, in which the tyre comprises a plurality of central ribs (411-413) and all the central ribs comprise a portion made from said at least one second rubber composition, said portion extending from the outer border of the central rib axially in the direction of the inner axial edge of the tread, the axial width of said portion being, over the entire radial depth of the central rib, greater than or equal to 20% of the axial width LC of the central rib.

4. Tyre according to Claim 3, in which all central ribs (411-413) are composed entirely of said at least one second rubber composition.

5. Tyre according to any one of Claims 1 to 3, in which the axial width (LP) of said portion is, over the entire radial depth of the central rib, less than or equal to 60% of the axial width LC of the central rib, the remainder of said at least one central rib being composed of at least one third rubber composition, this at least one third rubber composition comprising at least one elastomer and at least one reinforcing filler, optionally including a carbon black, the carbon black representing a percentage of greater than or equal to 0% and less than or equal to 50% of the weight of all of the reinforcing filler, said at least one third rubber composition having a tan δ0 value which is greater than the tan δ0 value of said at least one second rubber composition.

6. Tyre according to any one of Claims 1 to 5, in which the difference between the tan δ0 value of said at least one first rubber composition and the tan δ0 value of said at least one second rubber composition is greater than or equal to 0.05.

7. Tyre according to any one of Claims 1 to 6, in which said at least one first rubber composition also has a tan δ10 value which is less than the tan δ10 value of said at least one second rubber composition, where tan δ10 denotes the tan δ value measured at a temperature of 10°C and under a stress of 0.7 mPa.

8. Tyre according to Claim 7, in which the difference between the tan δ10 value of said at least one first rubber composition and the tan δ10 value of said at least one second rubber composition is greater than or equal to 0.0
